# EUROPÄISCHE PATENTANMELDUNG

(11) **EP 4 086 473 A1**
(43) Veröffentlichungstag der Anmeldung: **09.11.2022**
(21) Anmeldenummer: 21172872.0
(22) Anmeldetag: 07.05.2021
(51) Int. Cl.: F16D 13/64

(54) **TOLERANZRING MIT ANSCHLAG**

(71) Anmelder: SFS Group International AG, 9435 Heerbrugg (CH)
(72) Erfinder: Frei, Stefan, 7000 Chur (CH); Schönenberger, Markus, 9533 Kirchberg (CH); Staudigl, Alexander Christoph, 6870 Bezau (AT)

(57) **Zusammenfassung**

Ein Toleranzring ist ein Zwischenelement für eine Welle-Nabe-Verbindung, das in einer Nut zwischen Welle und Nabe positioniert wird und eine kraftschlüssige Verbindung zwischen diesen beiden Elementen herstellt. Er besitzt im Wesentlichen die Form eines Hohlzylinders, wobei dessen Mantelfläche Verprägungen in Form von radial nach innen und/oder nach aussen weisender Erhebungen aufweist. Hier wird an einem Längsende ein flanschartiger Kragen vorgesehen, der in einer Radialebene zur Mittenlängsachse angelegt ist. Der Toleranzring wird bevorzugt mit dem flanschartigen Kragen aus einem duktilen Werkstoff hergestellt, insbesondere einstückig als Tiefziehteil aus Metall, bevorzugt aus Aluminium oder einer Aluminiumlegierung gefertigt.

Beschrieben werden ferner ein Montageverfahren für so einen Toleranzring sowie ein Kugelgewindetrieb und ein Gewindetrieb mit einem solchen Toleranzring.

## Beschreibung

Die vorliegende Erfindung befasst sich mit einem sogenannten Toleranzring, spezifisch für den Einsatz an einem Kugelgewindetrieb.

### TECHNISCHER HINTERGRUND

Ein Toleranzring ist grundsätzlich ein Zwischenelement für eine Welle-Nabe-Verbindung. Er besteht oft aus Federstahl und wird in einer Nut zwischen Welle und Nabe positioniert, wo er eine kraftschlüssige, in gewissen Grenzen elastische Verbindung zwischen diesen beiden Elementen herstellt. Ein Toleranzring ermöglicht durch seine Flexibilität sowohl den Ausgleich von Fertigungstoleranzen als auch von Wärmedehnung. Alternativ kann auch ein duktiler Werkstoff gewählt werden, dann liegt das Augenmerk zusätzlich auf einem verbesserten Formschluss zwischen Welle und Nabe; zudem werden die Handhabung und Montage erleichtert.

Ein Toleranzring besteht zumeist aus Metall und ist von zylindrischer Grundform. Die Mantelfläche des Zylinders weist in der Regel Verprägungen auf, das sind Oberflächenstrukturen, die durch Umformen des Metalls gebildet werden und regelmässige Erhebungen meist in Form eines Wellenzuges bilden. Ein Toleranzring weist dadurch einen freien Innendurchmesser und einen freien Aussendurchmesser auf, deren Differenz grösser ist als die Wandstärke des Ringmaterials.

Zur Montage wird der Toleranzring auf die Welle oder in die Nabe geschoben bzw. gepresst und danach mit dem Gegenstück verpresst. Die Verprägungen werden dabei plastisch verformt und stellen eine kraftschlüssige Verbindung von Welle und Nabe her. Ein Toleranzring kann auch mit einem axialen Trennschlitz versehen sein, was die Montage erleichtern kann. Diese Varianten lassen sich zudem leicht durch Prägen aus Bandmaterial herstellen und je nach gewünschtem Umfang des Toleranzrings durch einfaches Ablängen und Biegen von endlos hergestelltem Ausgangsmaterial konfektionieren.

Als Kugelumlaufspindel oder auch Kugelgewindetrieb (KGT) wird üblicherweise ein Wälzschraubtrieb bezeichnet mit Kugeln als Wälzkörper. Ein KGT ist eine Sonderform des Schraubgetriebes. Zu den Hauptbestandteilen eines KGT zählen eine zentrale Gewindespindel und eine diese Spindel umgreifende Spindelmutter. Die Gewinde sind als zueinander komplementäre Kugelrillen ausgelegt, was es im Betrieb erlaubt zwischen Gewindespindel und Spindelmutter Kugeln umlaufen zu lassen, weil Innen- und Aussengewinde zusammen als Kugelführung wirken. Anders als bei einer reinen Schraube-Mutter-Verbindung, bei der die Gewindeflanken flächig aufeinander gleiten, übernehmen beim KGT die umlaufenden Kugeln im Kugelkanal die Lastübertragung zwischen Mutter und Spindel. Die flächige Gleitbewegung wird also durch eine (Ab-) Rollbewegung ersetzt, was mit verringerter Reibung einhergeht.

Um einen geschlossenen Umlaufpfad für die Kugeln zu erhalten, werden (zumeist) in der Spindelmutter eine oder mehrere Kugelumlenkungen eingesetzt. Diese haben die Aufgabe, die Kugeln an einer ersten Stelle aus der Kugelführung zwischen Spindelmutter und Gewindespindel herauszuheben und an einer zweiten Stelle zurückzuführen. Die Kugelrückführung stellt also einen Bypass dar, der eine oder mehrere Gewindezüge des Mutter-Spindelsystems überbrückt und damit einen geschlossenen Umlauf für die Kugeln eines KGT erlaubt.

Schraubgetriebe, sowohl in der Auslegung als Kugelgewindetriebe bzw. Mutter-Spindel-Schraubgetriebe, werden in vielen technischen Anwendungen als Linearantrieb eingesetzt, vor allem im Maschinenbau und dort bevorzugt in Werkzeugmaschinen. Heute spielen KGT und Mutter-Spindel-Schraubgetriebe auch eine zunehmende Rolle in elektromechanischen und elektro-hydraulischen Bremssystemen, wo sie als Ersatz für hydraulische Bremszylinder oder parallel zu bekannten Bremssystemen bei Bremsassistenzsystemen eingesetzt werden.

### STAND DER TECHNIK

In der vorerwähnten Anwendung in einem Bremssystem bzw. Bremsassistenzsystem wird die Gewindespindel eines KGT üblicherweise an einem Längsende mit einer Antriebseinheit verbunden, während die Spindelmutter auf einen Bremskolben wirkt bzw. auf ein anderes Betätigungs- oder Übertragungselement. Häufig weisen KGT zudem axial auf die Gewindespindel aufgeschobene Bauteile auf wie Stützscheiben oder Radialanschlagelemente. Diese werden z.B. auf einen als Aussensechskant ausgeführten Abschnitt der Gewindespindel positioniert und dort von einem Sicherungsring (Splintring, Pressring) gehalten.

Die vorliegende Erfindung hat die Aufgabe, einen Toleranzring vorzustellen, der neben seiner Kernfunktion als kraftschlüssiges Verbindungselement zwischen einer Nabe und einem als Welle ausgebildeten Endabschnitt einer Gewindespindel zudem noch die Funktion eines Sicherungsringes zur Verfügung stellen kann.

### BESCHREIBUNG DER ERFINDUNG

Ein erfindungsgemässer Toleranzring weist im Wesentlichen eine hohlzylindrische Grundform (kurz auch: Hohlzylinder) auf mit einem ersten und einem zweiten Längsende. Eine Mittenlängsachse markiert auch die Symmetrieachse/Zentralachse. Die Mantelfläche des Hohlzylinders weist Verprägungen in Form von radial nach innen und/oder nach aussen weisender Erhebungen auf. Diese Verprägungen sind dazu angelegt, um bei der Montage plastisch verformt zwischen Welle und Nabe für den Kraftschluss / Formschluss zu sorgen. Am zweiten axialen Ende ist ein flanschartiger Kragen vorgesehen, der in einer Radialebene zur Mittenlängsachse angelegt ist. Flanschartig meint hierbei die Form des Kragens, der in der Radialebene flächig, bevorzugt kreisringförmig angelegt ist.

Der Toleranzring mit Anschlag lässt sich grundsätzlich aus allen geeigneten Werkstoffen mit hoher Duktilität fertigen, bevorzugt jedoch einstückig als Tiefziehteil aus Metall. Das bevorzugte Material hierbei ist Aluminium bzw. eine Aluminiumlegierung. Für den Zweck der Offenbarung sollen als "geeignete Werkstoffe mit hoher Duktilität" all jene technischen äquivalent verwendbaren Werkstoffe verstanden sein, die ein Fachmann im technischen Kontext als Alternative zu Aluminium in Betracht ziehen würde.

In praktischer Ausführung kann so ein Toleranzring aus einem glatten Rohrabschnitt umgeformt werden oder aus einem flachen, z.B. rund ausgestanzten Aluminiumteil tiefgezogen werden. Die resultierende Materialstärke kann je nach Einsatzzweck ausgelegt werden und findet in der Umformbarkeit des Materials seine natürlichen Grenzen. Realisiert wurden beispielsweise effektive Wandstärken im Bereich von 0.3mm, wobei, je nach Umformprozess unterschiedliche Wandstärken in verschiedenen Bereichen des Toleranzringes realisiert werden können. So kann durch geeignete Prozessführung der Flansch auch stärker ausgelegt werden als der Mantelbereich des Hohlzylinders mit seinen Verprägungen. Diese Verprägungen können als in die Mantelfläche gewellt, geriffelt oder gerippt eingeprägte Oberflächenstrukturen realisiert werden.

Der Übergangsbereich von der hohlzylindrischen Grundform zum flanschartigen Kragen wird bevorzugt fliessend ausgestaltet, das heisst im Wesentlichen ohne Kanten und Knicke. Die Verprägungen in der Mantelfläche können in den Übergangsbereich auslaufen bzw. in ihn übergehen. Der flanschartige Kragen wird wegen seiner Funktion als Anschlag bevorzugt als glatter Kreisring ausgeführt. Nicht ausgeschlossen seien Oberflächenstrukturierungen oder Beläge, um die Funktion als Sicherung zu verbessern bzw. zu erhöhen.

Im Folgenden sei ein Verfahren zur Sicherung, in einer definierten Endposition, eines flachen Ringelementes beschrieben. Dieses Ringelement wird auf der Gewindespindel eines Kugelgewindetriebs angebracht. Mit Ringelement kann dabei im einfachsten Fall ein Bauteil in Form einer Unterlegscheibe sein, mit einer zentralen Öffnung. Diese Mittenöffnung kann auch als Polygon ausgeführt sein, um z.B. zu einer komplementären Struktur auf der Gewindespindel formschlüssig zu passen. Das Ringelement kann weiterhin eine Spindelstützscheibe, ein Lagerelement oder ein Radialanschlag sein.

Das Verfahren umfasst dabei die nachfolgend beschriebenen Schritte. Diese legen eine logische Reihenfolge fest, die jedoch durch Zwischenschritte unterbrochen und ergänzt werden kann, ohne den Kern des Verfahrens zu durchbrechen.
- Bereitstellen einer Gewindespindel mit einem im Wesentlichen zylinderförmigen, gewindefreien Endabschnitt. Mit Gewinde ist dabei, wie im vorliegenden Anwendungsfall beschrieben, vor allem ein als Kugelrille ausgeführtes Gewinde verstanden.
- Vorsehen einer Sollposition auf diesem Endabschnitt der Gewindespindel, mit einem Längsanschlag, der die Bewegung des vorgesehen Ringelementes in einer ersten axialen Richtung beschränken kann. Dieser Längsanschlag kann beispielsweise eine Stufe (Durchmesseränderung) oder ein Ring (auch abschnittsweise unterbrochen) sein.
- Aufschieben des Ringelementes auf den Endabschnitt, bis der Längsanschlag erreicht wird
- Aufbringen eines Toleranzringes mit den oben beschriebenen Eigenschaften auf den Endabschnitt der Gewindespindel, und zwar mit dem flanschartigen Kragen voran, bis der Kragen (Flansch) das Ringelement definiert an den Längsanschlag andrückt und in der Sollposition fixiert. Der Kragen wirkt somit als Sicherung für das Ringelement.

Weitergehend kann der Bereich des flanschartigen Kragens punktuell oder flächig an den Endabschnitt der Gewindespindel angepresst werden zur Sicherung des Ringelements. Ferner kann im Endabschnitt der Gewindespindel im Bereich der Sollposition des Ringelements ein umlaufender Einstich in der Gewindespindel vorgesehen werden. Durch das Verpressen greift der Übergangsbereich des Toleranzrings in den Einstich ein und hält die Position fest.

Anschliessend kann, der Funktion als Zwischenelement einer Welle-Nabe-Verbindung folgend, die mit dem Toleranzring versehene Gewindespindel mit einer Nabe verbunden werden, bzw. einem Antriebs- oder Abtriebselement.

Wie mehrfach erwähnt, ist das vorrangige, aber nicht ausschliessliche Anwendungsgebiet des Toleranzringes der Einsatz bei einem Kugelgewindetrieb. Dieser umfasst im Wesentlichen eine Gewindespindel mit Aussengewinde und eine diese Spindel umgreifende Spindelmutter mit einem Innengewinde. Die Gewindezüge sind als zueinander komplementäre Kugelrillen ausgelegt und nehmen im verbauten Zustand zwischen Gewindespindel und Spindelmutter eine Vielzahl von Kugeln auf. Diese werden durch eine Kugelrückführung, die einen oder mehrere Gewindegänge überbrückt, auf einem endlosen Kugelumlauf gehalten. Die Gewindespindel weist an einem Längsende einen im Wesentlichen zylinderförmigen, gewindefreien Endabschnitt auf mit einer Sollposition, die mit einem Längsanschlag versehen ist. Diese dient dazu die Bewegung eines dort vorgesehen Ringelementes in einer ersten axialen Richtung zu beschränken. Erfindungsgemäss wird ein Toleranzring gemäss obiger Beschreibung vorgesehen, um auf den Endabschnitt der Gewindespindel aufgeschoben zu werden und die Endposition eines Ringelementes zu definieren.

Ein Gewindetrieb ohne Kugeln lässt sich in ähnlicher Weise mit einem Toleranzring ausstatten wie ein Kugelgewindering. Ein solcher Gewindetrieb wie z.B. ein Trapezgewindetrieb weist ebenfalls ein aus Gewindespindel und Spindelmutter gebildetes Gewinde auf, bei der die Gewindegänge jedoch direkt aufeinander gleiten bzw. ineinander kämmen. Die Gleitreibung ergibt gegenüber der Kugelabrollreibung eines KGT einen schlechteren Wirkungsgrad, dafür lassen sich grössere axiale Kräfte mit geringerem Aufwand übertragen.

### KURZBEZEICHNUNG DER FIGUREN

Figur 1 zeigt einen Toleranzring gemäss vorliegender Beschreibung in Seitenansicht
Figur 2 zeigt den Toleranzring von Figur 1 in axialer Draufsicht im Querschnitt der Ebene B-B
Figur 3 zeigt ein Ringelement auf dem Endabschnitt einer Gewindespindel, gesichert durch einen Toleranzring mit Anschlagflansch gemäss vorliegender Erfindung, im Längsschnitt
Figur 4 zeigt ein Ringelement gesichert nach Stand der Technik, im Längsschnitt

### BESCHREIBUNG DER FIGUREN

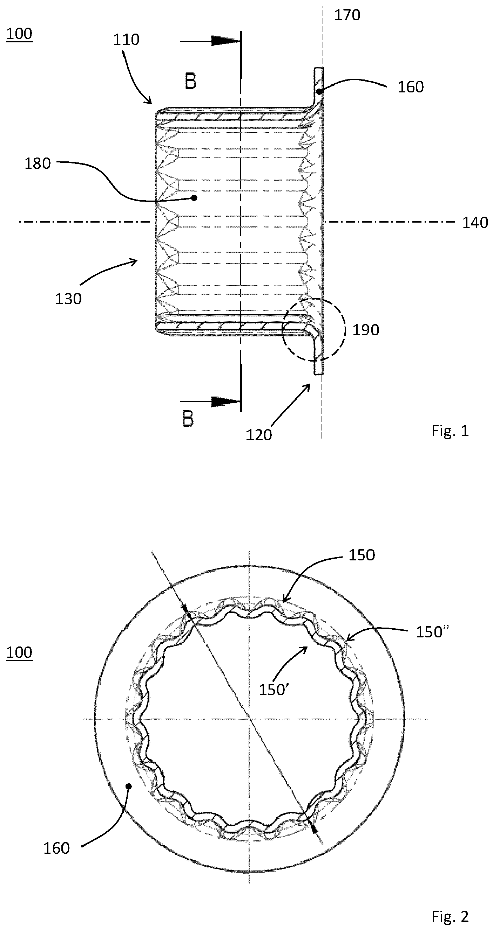

Die Figuren 1 und 2 zeigen eine Seitenansicht bzw. Querschnittsansicht desselben Bauteils und werden daher gemeinsam beschrieben. Ein Toleranzring 100 mit Anschlag wie hier gezeigt weist zwei grundsätzliche Funktionsbereiche auf. Der Grundkörper bzw. die Grundform 130 ist ein Hohlzylinder mit einer Mittenlängsachse 140 und einem zylindrisch auslaufenden ersten Längsende 110. Das zweite Längsende 120 trägt den flanschartigen Kragen 160, welcher in einer zur Mittenlängsachse rechtwinklig angeordneten Radialebene 170 liegt. Ein fliessender Übergangsbereich 190 markiert den Übergang vom Hohlzylinder 130 in den Kragen 160. Die Mantelfläche 180 der Hohlzylinder-Grundform 130 ist in einigen Bereichen gerippt, gewellt bzw. aus der reinen Zylinderform heraus verformt, um die Verprägungen 150, 150', 150" zu bilden. Wie Figur 2 im Querschnitt zeigt, werden dadurch ein lichter Innenradius und ein lichter Aussenradius durch die Kuppen bzw. Täler der Verprägungen definiert.

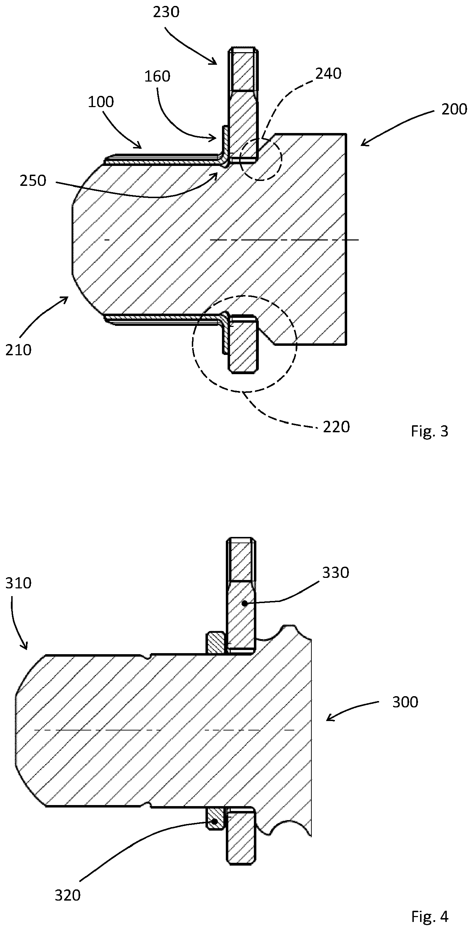

Die Figuren 3 und 4 zeigen den Endabschnitt 210, 310 einer Gewindespindel 200 bzw. 300. Eine solche Gewindespindel kann sowohl Teil eines Kugelgewindetriebes oder eines Mutter-Spindel-Gewindetriebes sein. Mit 230 bzw. 330 ist ein Ringelement bezeichnet, das beispielsweise eine Radialanschlag oder die Stützscheibe eines Lagers bildet. Es wird auf den Endabschnitt 210, 310 aufgeschoben und gesichert. Im Fall der Figur 4 nach Stand der Technik geschieht das durch einen Sicherungsring 320.

Figur 3 zeigt die erfinderische Lösung. Das Ringelement 230 liegt definiert am axialen Längsanschlag 240 im Endabschnitt 210 an. Ein Toleranzring 100 ist auch das Ende der Gewindespindel 200 aufgeschoben, so dass der flanschartige Kragen 160 zusammen mit dem Längsanschlag 240 das Ringelement 230 in der Sollposition 220 definiert fixiert. Ein umlaufender Einstich 250 in der Gewindespindel 250 erlaubt es, durch Verpressen oder Anpressen zumindest des Übergangsbereichs 190 des Toleranzrings einen definierten Sitz zu schaffen.

## Patentansprüche

1. Toleranzring (100), mit
einer im Wesentlichen hohlzylindrischen Grundform (130) mit einem ersten (110) und einem zweiten axialen Längsende (120) und einer Mittenlängsachse (140) wobei die Mantelfläche (180) des Hohlzylinders Verprägungen in Form von radial nach innen und/oder nach aussen weisender Erhebungen (150, 150', 150") aufweist, **dadurch gekennzeichnet, dass**
am zweiten axialen Längsende (120) ein flanschartiger Kragen (160) vorgesehen ist, der in einer Radialebene (170) zur Mittenlängsachse (140) angelegt ist.

2. Toleranzring (100) nach Anspruch 1, **dadurch gekennzeichnet, dass** der Toleranzring mit dem flanschartigen Kragen aus einem Werkstoff mit hoher Duktilität gefertigt ist.

3. Toleranzring (100) nach Anspruch 1-2, **dadurch gekennzeichnet, dass** der Toleranzring mit dem flanschartigen Kragen einstückig als Tiefziehteil aus Metall gefertigt ist.

4. Toleranzring (100) nach den Ansprüchen 1-3, **dadurch gekennzeichnet, dass** der Toleranzring aus Aluminium oder einer Aluminiumlegierung gefertigt ist.

5. Toleranzring (100) nach den Ansprüchen 1-4, **dadurch gekennzeichnet dass** der Übergangsbereich (190) von der hohlzylindrischen Grundform (130) zum flanschartigen Kragen (160) fliessend ausgestaltet ist.

6. Toleranzring (100) nach den Ansprüchen 1-5, **dadurch gekennzeichnet dass** die Verprägungen in der Mantelfläche als gewellte, geriffelte oder gerippt eingeprägte Oberflächenstrukturen realisiert werden.

7. Verfahren zur Sicherung eines auf der Gewindespindel (200) eines Kugelgewindetriebs anzubringenden flachen Ringelementes (230) in einer definierten Endposition umfasst die Schritte:
- Bereitstellen einer Gewindespindel (200) mit einem im Wesentlichen zylinderförmigen, gewindefreien Endabschnitt (210);
- Vorsehen einer Sollposition (220) auf diesem Endabschnitt (210) der Gewindespindel (200), mit einem Längsanschlag (240), der die Bewegung des vorgesehen Ringelementes (230) in einer ersten axialen Richtung beschränken kann;
- Aufschieben des Ringelementes (230) auf den Endabschnitt (210), bis der Längsanschlag (240) erreicht wird
- Aufbringen eines Toleranzringes (100) nach Anspruch 1-6 auf den Endabschnitt (210) der Gewindespindel (200) mit dem flanschartigen Kragen (160) voran, bis der Kragen (160) das Ringelement (230) definiert an den Längsanschlag (240) andrückt und in der Sollposition (220) fixiert.

8. Verfahren nach Anspruch 7, **dadurch gekennzeichnet, dass** der Bereich des flanschartigen Kragens (160) punktuell oder flächig an den Endabschnitt (210) der Gewindespindel (200) angepresst wird zur Sicherung des Ringelements (230).

9. Verfahren nach Anspruch 6, **dadurch gekennzeichnet, dass** im Endabschnitt (210) der Gewindespindel (200) im Bereich der Sollposition 220 ein umlaufender Einstich vorgesehen ist, in den der Übergangsbereich (190) des Toleranzrings nach dem Anpressen eingreift.

10. Verfahren nach den Ansprüchen 7-9, **dadurch gekennzeichnet, dass** die mit dem Toleranzring (100) versehene Gewindespindel (200) mit einer Nabe verbunden wird.

11. Kugelgewindetrieb, umfassend im Wesentlichen eine Gewindespindel (200) mit Aussengewinde und eine diese Spindel umgreifende Spindelmutter mit einem Innengewinde, wobei
- die Gewindezüge als zueinander komplementäre Kugelrillen ausgelegt sind, die im verbauten Zustand zwischen Gewindespindel und Spindelmutter eine Vielzahl von Kugeln aufnehmen, die durch eine Kugelrückführung, die einen oder mehrere Gewindegänge überbrückt, auf einem endlosen Kugelumlauf gehalten werden;
- wobei ferner die Gewindespindel (200) an einem Längsende einen im Wesentlichen zylinderförmigen, gewindefreien Endabschnitt (210) aufweist mit einer Sollposition (250), die mit einem Längsanschlag (240) versehen ist, der die Bewegung eines dort vorgesehen Ringelementes (230) in einer ersten axialen Richtung beschränken kann;
**dadurch gekennzeichnet, dass** ein Toleranzring (200) gemäss den Ansprüchen 1-6 vorgesehen ist um auf den Endabschnitt (210) der Gewindespindel aufgeschoben zu werden und die Endposition eines Ringelementes (230) zu definieren.

12. Gewindetrieb, umfassend im Wesentlichen eine Gewindespindel mit Aussengewinde und eine diese Spindel umgreifende und in deren Aussengewinde mit einem komplementären Innengewinde eingreifende Spindelmutter, wobei die Gewindespindel an einem Längsende einen im Wesentlichen zylinderförmigen, gewindefreien Endabschnitt aufweist mit einer Sollposition, die mit einem Längsanschlag versehen ist, der die Bewegung eines dort vorgesehen Ringelementes in einer ersten axialen Richtung beschränken kann;
**dadurch gekennzeichnet, dass** ein Toleranzring (200) gemäss den Ansprüchen 1-6 vorgesehen ist um auf den Endabschnitt der Gewindespindel aufgeschoben zu werden und die Endposition eines Ringelementes zu definieren.
